(19) Europäisches Patentamt / European Patent Office / Office européen des brevets

(11) **EP 3 109 846 A1**

(12) **EUROPEAN PATENT APPLICATION**

(43) Date of publication:
**28.12.2016 Bulletin 2016/52**

(51) Int Cl.:
*G09B 19/00* (2006.01)     *G09B 19/24* (2006.01)
*G09B 25/00* (2006.01)     *B23K 1/00* (2006.01)

(21) Application number: **15185981.6**

(22) Date of filing: **18.09.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **22.06.2015 US 201514746201**

(71) Applicant: **Linde Aktiengesellschaft
80331 München (DE)**

(72) Inventor: **Berkmanns, Joachim
Oakville, Ontario L6M 5C1 (CA)**

(74) Representative: **Hofmann, Andreas et al
RGTH
Patentanwälte PartGmbB
Postfach 33 02 11
80062 München (DE)**

(54) **METHOD AND APPARATUS FOR WELDING TRAINING**

(57)     In order to overcome the limitations and problems of earlier methods for training, in particular during welding operations, for example during production welding operations, a welder to weld more efficiently, the following steps are proposed:

a) forming a welding sample (10), in particular a joint between two pieces of metal, wherein the welding sample (10) has one or more predetermined spots (1, 2, 3, 4, 5), in particular marks or markings, along its length;

b) starting an application on a computer, in particular on a smartphone;

c) starting a welding torch;

d) communicating a spoken command to the application on the computer;

e) beginning welding on the welding sample (10), thereby creating a weld;

f) communicating a spoken command to the application on the computer when the weld has reached one of the predetermined spots (1, 2, 3, 4, 5) along the welding sample (10); and

g) receiving a communication from the application on the computer in response to the spoken command of step f).

FIG. 2

## Description

### Technical field of the present invention

The present invention relates to the technical field of welding training.

### Technological background of the present invention

During gas metal arc welding (GMAW) operations, the welder attempts to produce a weld as specified in a drawing or welding procedure sheet (WPS). A weld performed to specification will have enough strength to carry the intended load.

One of the most common and costly problems in welding is "overwelding". Overwelding means the situation where too much filler wire is deposited per unit length because the welder welds too slowly for a given wire speed. By welding too slowly, the welder not only wastes time but also deposits more wire material than is necessary to form a proper weld.

So for example, a fillet weld with a 3/16 of an inch (= about 4.7625 millimeters) leg size is specified but the welder produces a one quarter inch fillet, then there is an increase of 78 percent in the wire used. Overwelding will also cause those applications where the weld joints need to be cleaned after the welding operation to need excessive grinding time and use of abrasives.

The problem with overwelding is based on a desire to form a proper weld and be on the safe side as far as weld strength is concerned. However, slower welding and a greater use of welding wire results in significant amounts of money wasted in labor and material.

Gauges are typically used to measure a weld after its completion. However by then, it is too late to determine if overwelding has occurred and adjust the weld accordingly. While this may be beneficial in terms of the welder adjusting speed on the next weld, this is inefficient because the feed back is not instantaneous.

Virtual weld trainers and weld simulators try to address this problem but they are expensive. Further there is always the transition from the virtual training environment to the real welding in industrial applications that must be taken into consideration as well.

As such, it can be seen that an inexpensive training solution that is widely accessible and applicable to real time welding is still needed.

This solution is provided by a training application which can provide the welder instantaneous feedback as to whether their welding is too fast or too slow. The training application is activated by a wired or wireless (Bluetooth) connection between a computer preferably portable such as a smartphone or tablet and a microphone on or in close proximity to the welder. Feedback is then given to the welder via a headset or speaker worn by the welder or incorporated in the welding helmet or protective gear.

### Disclosure of the present invention: object, solution, advantages

Starting from the disadvantages and shortcomings as described above as well as taking the prior art as discussed into account, an object of the present invention is to overcome the limitations and problems that earlier methods and apparatus have experienced.

This object is accomplished by a method comprising the features of claim 1 as well as by an apparatus comprising the features of claim 13. Advantageous embodiments and expedient improvements of the present invention are disclosed in the respective dependent claims.

The present invention basically provides for a method and an apparatus for training a welder to avoid welding either too fast or too slow are disclosed.

In a first embodiment of the present invention, there is disclosed a method for training a welder to weld more efficiently comprising the steps of:

    a) forming a welding sample, wherein the welding sample has one or more predetermined spots, in particular marks or markings, along its length;
    b) starting an application on a computer;
    c) starting a welding torch;
    d) simultaneously to step c) communicating a spoken command to the application on the computer;
    e) beginning welding on the welding sample, thereby creating a weld;
    f) communicating a spoken command to the application on the computer when the weld has reached one of the predetermined spots along the welding sample; and
    g) immediately receiving a communication from the application on the computer in response to the spoken command of step f).

The communicating may advantageously comprises speaking a command to the application on the computer and receiving feedback from the application on the computer.

The welding sample is typically a joint between two pieces of metal that will have one or more predetermined spots which are equidistant from each other. These equidistant predetermined spots are put on the welding sample in anticipation of the training.

The computer employed may be any traditional computer such as a desktop or laptop but may preferably be a smartphone.

A variety of welding techniques and accompanying torches can be employed in the training operation, for example those selected from the group consisting of arc welding, tungsten inert gas welding, plasma arc welding, and shielded metal arc welding.

The spoken commands of steps d) and f) may expediently be made into a microphone.

The microphone may favourably be mounted on welding apparel selected from the group consisting of a welding helmet, goggles, gloves, vest and jacket.

The microphone may preferably be physically separate from the welder as well by being in close proximity through means of holding the microphone.

The microphone may advantageously be connected to the computer. This connection may expediently be by a wired connection or by a wireless connection. In the event the connection is a wireless connection, the connection may favourably be through a Bluetooth connection.

The application may preferably comprise means to interpret the spoken command.

The spoken command to the application on the computer may advantageously start a timing mechanism.

The spoken command of step f) may expediently stop the timing mechanism, reset the timing mechanism and start the timing mechanism over again from zero time.

According to a favoured embodiment of the present invention, the welder may further continue the weld of step e) towards a second predetermined spot along the welding sample.

The communication from the application on the computer may preferably be to a headset and/or to a microphone.

The headset can be any type of headset where the speakers are placed on the ear or are inserted into the ear. Alternatively the feedback from this weld application to the welder could also be given via a speaker incorporated into the welding helmet or attached to the welding gear or visually, for example using light indicators in the helmet.

The communication from the application on the computer may advantageously inform the welder of the welding speed. This communication will alert the welder undergoing the training as to whether the weld between two points on the welding sample has been completed too slowly, too fast or good.

Depending upon the feedback from the application, the welder will adjust the welding speed based upon the communication from the application on the computer. As each mark is passed the welder receives feedback from the application as to the speed of the welding.

In a preferred embodiment of the present invention, the training occurs during welding operations, in particular during production welding operations.

In a different embodiment of the present invention, there is disclosed a welding training apparatus comprising

- a computer, in particular a smartphone,
- a welding torch,
- a welding sample, and
- a welding apparel,

wherein the welding apparel contains a microphone in communication with the computer, in particular being connected to the computer.

The welding apparel may advantageously be selected from the group consisting of a welding helmet, goggles, gloves, vest and jacket.

The spoken command of steps d) and f) may expediently be made into a microphone. The microphone may favourably be mounted on welding apparel selected from the group consisting of a welding helmet, goggles, gloves, vest and jacket. The microphone may preferably be physically separate from the welder as well by being in close proximity through means of holding the microphone.

The microphone is connected to the computer, and this connection may advantageously be wired connections or wireless connections. In the event of a wireless connection, the connection may expediently be through a Bluetooth connection.

The application and/or the computer may favourably comprise means to interpret the spoken command.

The welding sample may preferably be a joint between two pieces of metal that may advantageously comprise one or more predetermined spots, said spots being expediently equidistant from each other. These equidistant predetermined spots may favourably be put on the welding sample in anticipation of the training.

The present invention finally relates to the use of at least one welding training apparatus of the above-described type for training, in particular during welding operations, for example during production welding operations, a welder to weld more efficiently.

**Brief description of the drawings**

For a more complete understanding of the present embodiment disclosures and as already discussed above, there are several options to embody as well as to improve the teaching of the present invention in an advantageous manner. To this aim, reference may be made to the claims dependent on claim 1 as well as on claim 13; further improvements, features and advantages of the present invention are explained below in more detail with reference to particular and preferred embodiments by way of non-limiting example and to the appended drawing figures taken in conjunction with the following description of the embodiments, of which:

| | |
|---|---|
| FIG. 1 | is a schematic rendering of a series of tacks along a welding sample which the welder guides a welding torch in conjunction with the training application; |
| FIG. 2 | is a schematic rendering of a series of tacks along a welding sample showing the progression of the weld as used with the training application; |
| FIG. 3A, FIG. 3B, FIG. 3C and FIG. 3D | represent certain joint geometries that may be programmed into the training application. |

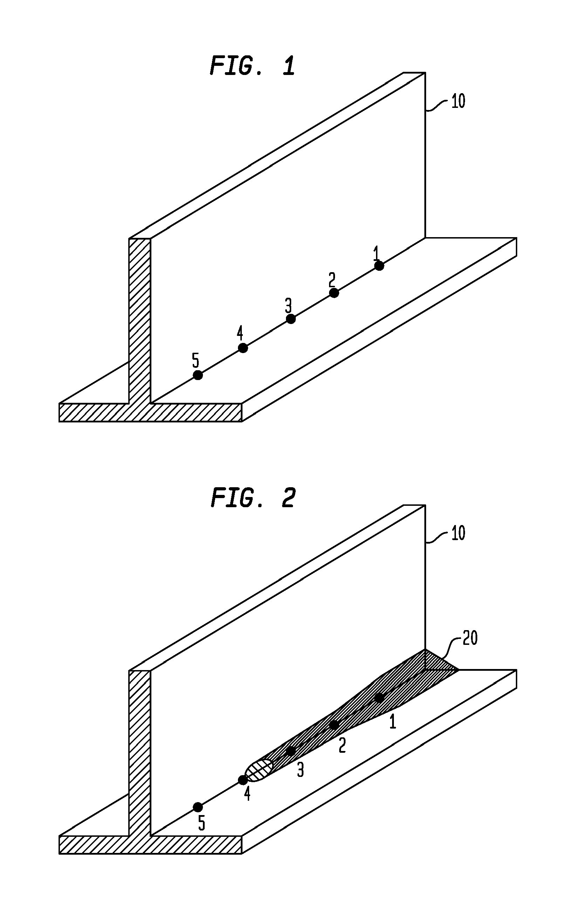

In the appended drawing figures, like equipment is labelled with the same reference numerals throughout the description of FIG. 1 to FIG. 3D.

**Detailed description of the drawings; best way of embodying the present invention**

Before explaining the inventive embodiments in detail, it is to be understood that the present invention is not limited in its application to the details of construction and arrangement of parts illustrated in the accompanying drawings, if any, since the present invention is capable of other embodiments and being practiced or carried out in various ways. Also it is to be understood that the phraseology or terminology employed herein is for the purpose of description and not of limitation.

For training purposes, as shown in FIG. 1, the welder tacks up some fillet welds or other joint geometries and puts down marks 1, 2, 3, 4 and 5 an equal distance apart (i. e., every one inch = every 25.4 millimeters) on said welding sample 10. The training application can then be opened up on a computer such as a smartphone and a series of parameters can be entered using the touch screen of the smartphone.

These parameters can include the distance between the marks, the joint geometry, for example, fillet with required leg size and the wire diameter and wire feed rate that is going to be employed for the training operation.

Based on the input the application will calculate the speed at which the welding torch will need to be moved along the weld path in order to deposit the correct amount of filler wire per unit of weld length and the welding training can begin.

The application essentially calculates the speed at which the torch needs to be moved in order to deposit enough wire to fill any gaps and in addition create the desired root or top reinforcement. Therefore, the training application is preprogrammed with a library of commonly used joint geometries.

Once a joint geometry is picked it will ask the welder to input all data necessary to calculate the gap volume and volume of the reinforcement between two marks.

Finally, the training application will ask for the diameter of the welding wire and the intended wire feed speed. Dividing the total volume of gap and reinforcement by the wire volume deposited per unit time will allow the training application to calculate the time needed from one mark to the next.

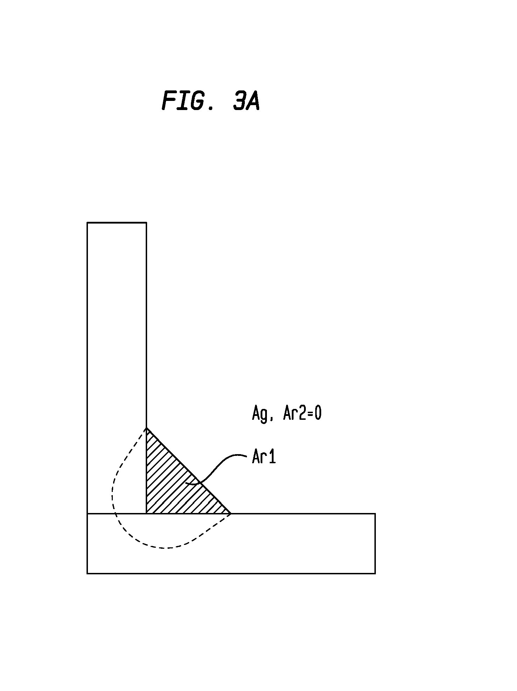

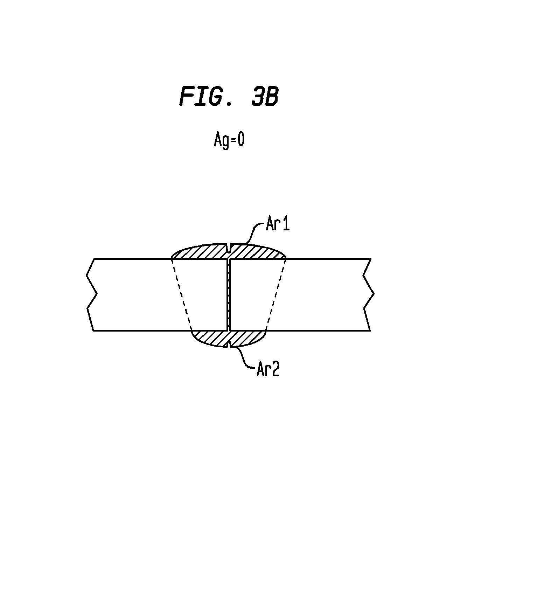

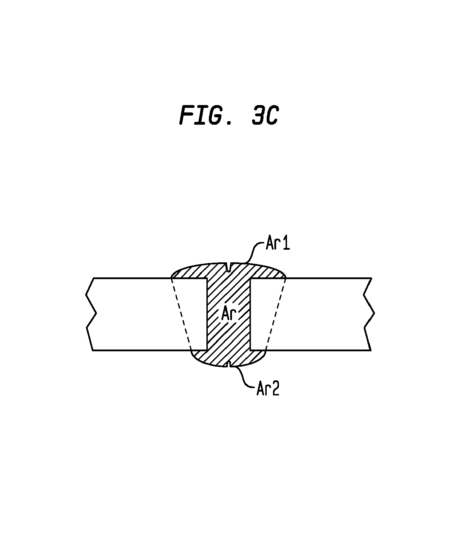

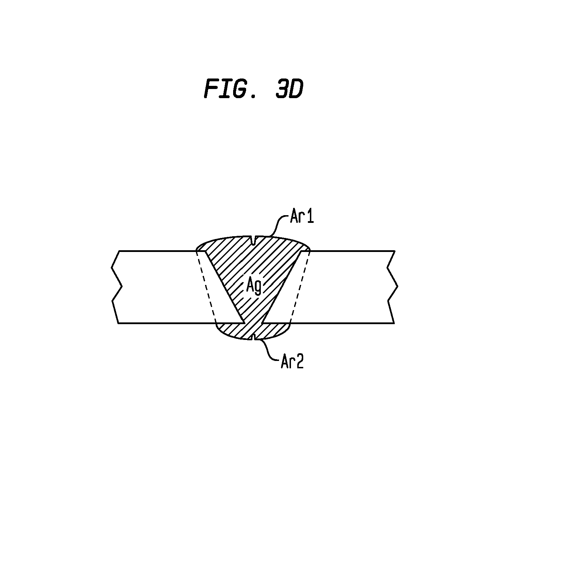

FIG. 3A, FIG. 3B, FIG. 3C and FIG. 3D show four joint geometries that may be employed as part of the training application. These are representative joint geometries however the training application is not limited solely to these. These are commonly used geometries that are often welded in a single pass.

In FIG. 3A, FIG. 3B, FIG. 3C and FIG. 3D, the capital letter "A" identifies a portion of the cross section area of the weld that needs to be filled with filler wire. The index "g" indentifies gap area, "r1" the overhead or top reinforcement and "r2" the root reinforcement.

In the case of the fillet weld in FIG. 3A the connection is made by depositing the correct amount of filler wire to fill up the triangular shaped area. Ag and Ar2 are both zero.

In the case of the butt joint in FIG. 3B where Ag is zero, filler material is needed to create the convex overhead and root reinforcements, which can be described for example as circle segments.

If there is a gap between the square edged material as shown in FIG. 3C or if the edge has been prepared in the shape of a V in FIG. 3D then the gap volumes as well as the concave overhead and root areas have to be filled with filler wire.

The dashed lines within each of the four joint geometries of FIG. 3A, FIG. 3B, FIG. 3C and FIG. 3D represent the fusion line of the completed weld seam.

All these areas can be described with simple mathematical formulas (I) and (II) below and when multiplied with the distance between two marks determine the volume of filler material that needs to be deposited. Dividing this volume by the volume of wire that is fed into the welding process per unit time, calculated by multiplying the wire cross section with the wire feed speed, results in the speed at which the welding torch has to move.

(I) The total gap and reinforcement volume

$$= (A_g + A_{r1} + A_{r2}) * \text{the distance between marks.}$$

(II) The time to reach the next mark

$$= (A_g + A_{r1} + A_{r2}) * \text{the distance between marks} / (\text{wire cross section} * \text{wire feed speed})$$

Additionally, instead of relying on the training application to calculate the speed at which the torch has to be moved based on the calculations described above, the appropriate speed may be determined by a weld trainer, welding instructor or may be already given on the weld procedures. In this case, the weld target speed can simply be put into the training application and the training application will then time the welder against this desired target speed.

The welding torch, type and source of shielding gas, welding wire and related feeding and power source equipment are all typical of what a welder employs in welding operations so there is no need for special welding equipment. The welder will ignite the torch and begin the welding operations on the welding sample 10 in FIG. 2.

At the same time the welder will say "start" or another word signifying that the welding training application should begin the training application. When the molten pool 20 reaches the first mark 1, the welder says "mark" or other equivalent signifier into the microphone.

The welding application having measured the time from when the welder said "start" will immediately inform the welder that the welding operation, as measured by the time it took the welder to reach the first mark was proceeding either too slowly, too fast or just right.

Here, the welder was too slow in laying down the weld from the start to mark 1 and therefore the computer states "faster" upon the welder communicating that this mark was achieved. At the same time the weld training application has also started to measure the time the welder will need to progress to mark 2.

For purposes of the training application, the time necessary to achieve "just right" will be a range of time in which the welder should be moving the welding torch from one mark to the next. so that the welder does not need to "hit" a particular time for the weld to be considered good.

The training application will inform the welder at each mark of whether the welding operation is proceeding too fast or too slow and the welder can adjust the speed of the welding torch as it progresses to the next mark.

The welder can continue welding for as many marks as originally laid out on the welding sample and entered into the training application. So as noted here in FIG. 1 and FIG. 2, five marks are laid out equidistant from each other.

As shown in FIG. 1, a welder has laid out five marks 1, 2, 3, 4 and 5 and has tacked them at exactly one inch (= 25.4 millimeters) spacing between the marks.

FIG. 2 shows the progression of the weld 20 performed per the training application. In this example, the welder began by stating "start" into the microphone which transmitted the signal to the welding application present on the computer.

The welding application had already been configured with the various parameters necessary to measure the welding operation properly, namely distance between marks, the joint geometry, leg size and the wire diameter and wire feed rate.

When the welder reached the first mark 1, "mark" was stated into the microphone and the welding training application immediately stated "faster" which means that the welder was too slow directing the welding torch from the starting mark to the first mark and consequently overwelded the metal.

Now without losing eye contact with the welding sample, the welder continues the welding of the weld 20 at slightly increase speed from the first mark 1 to the second mark 2 at which point "mark" is again stated and the welding training application immediately responds to the headset in the welding helmet "faster" which again indicates that the welder was still too slow between the first mark 1 and the second mark 2.

When the tip of the molten pool or weld 20 touches the third mark 3 the welder says "mark" again and the welding training application immediately responds to the welder's helmet "good" and the welder knows that the proper welding speed was employed for that inch on the welding sample.

The example shown in FIG. 2 only has the welder welding through to marks 1, 2 and 3 on the welding sample. The application though may have any number of marks input into it for training purposes so that the welder could have continued this training example through marks 4 and 5 and any number of marks beyond mark 5 that are not shown in FIG. 2.

The equipment employed in operating the welding training includes a computer such as a smartphone, a welding apparatus, a welding torch and welding apparel wherein the welding apparel contains a microphone and headset in communication with the computer.

The smartphone can be any phone capable of running the application training program and capable of wired or wireless communication with the microphone and headset present on or in the vicinity of the welder. Smartphones (such as the iPhone 6 from Apple and the Samsung Galaxy) would be useful in performing the training application.

A headset can be any type of headset where the speakers are sitting on the ear or are inserted into the ear. Alternatively the feedback from this weld application to the welder could also be given via a speaker incorporated in the welding helmet or attached to the welding gear or visually, for example using light indicators in the helmet.

For purposes of the present invention, microphone is defined as including any type of suitable receiver which can produce an electrical signal from air pressure variations. The microphone may be one microphone or more than one microphone depending upon the type of welding operation and need for redundancy.

The spoken command, "start", "mark", etc. is made by the welder in the vicinity of a microphone. The microphone may be incorporated into sections of the welder's clothing.

For example, the microphone may be incorporated into a welder's welding apparel which is selected from the group consisting of a welding helmet, goggles, gloves, vest and jackets including other protective gear typically worn by a welder during welding operations.

The microphone may also be physically separate from the welder but in close proximity to the welder. Preferably, the spoken command is made into a microphone that is present in a welding helmet.

The microphone is connected to the smartphone and this connection can be selected from the group consisting of either a wired connection or a wireless connection. The wireless connection can be a Bluetooth connection.

In other embodiments of the present invention, the training tool could be employed in production operations where the parts could be etched or ink marked by a laser or plasma cutter as the parts are being prepared for welding.

So for example, the position of a reinforcement bracket that is to be welded onto the side of a pressure vessel can be ink marked in a previous production step. The ink markings can be equidistant and the welder can then use the training application in order to control and improve the motion of the weld around the path.

While this invention has been described with respect to particular embodiments thereof, it is apparent that numerous other forms and modifications of the present invention will be obvious to those skilled in the art. The appended claims in this invention generally should be construed to cover all such obvious forms and modifications which are within the true spirit and scope of the present invention.

**List of reference numerals**

| | |
|---|---|
| 1 | first mark |
| 2 | second mark |
| 3 | third mark |
| 4 | fourth mark |
| 5 | fifth mark |
| 10 | welding sample |
| 20 | molten pool |

**Claims**

1. A method for training, in particular during welding operations, for example during production welding operations, a welder to weld more efficiently comprising the steps of:

   a) forming a welding sample (10), in particular a joint between two pieces of metal, wherein the welding sample (10) has one or more predetermined spots (1, 2, 3, 4, 5), in particular marks or markings, along its length;
   b) starting an application on a computer, in particular on a smartphone;

c) starting a welding torch;

d) communicating a spoken command to the application on the computer;

e) beginning welding on the welding sample (10), thereby creating a weld;

f) communicating a spoken command to the application on the computer when the weld has reached one of the predetermined spots (1, 2, 3, 4, 5) along the welding sample (10); and

g) receiving a communication from the application on the computer in response to the spoken command of step f).

2. The method according to claim 1 wherein the one or more predetermined spots (1, 2, 3, 4, 5) are equidistant from each other.

3. The method according to claim 1 or 2 wherein the welding torch is used in a welding operation selected from the group consisting of arc welding, tungsten inert gas welding, plasma arc welding, and shielded metal arc welding.

4. The method according to at least one of claims 1 to 3 wherein said communicating comprises speaking a command to the application on the computer and receiving feedback from the application on the computer.

5. The method according to at least one of claims 1 to 4 wherein the spoken command of steps d) and f) are made into a microphone, said microphone

- in particular being mounted on welding apparel selected from the group consisting of a welding helmet, goggles, gloves, vest and jacket, and/or
- in particular being physically separate from a welder, and/or
- in particular being connected to the computer, said connection for example being selected from the group consisting of wired connections and wireless connections, such as a Bluetooth connection.

6. The method according to at least one of claims 1 to 5 wherein the application comprises means to interpret the spoken command.

7. The method according to at least one of claims 1 to 6 wherein the spoken command to the application on the computer starts a timing mechanism.

8. The method according to at least one of claims 1 to 7 wherein the spoken command of step f) stops the timing mechanism, resets the timing mechanism and starts the timing mechanism over again from zero time.

9. The method according to at least one of claims 1 to 8 wherein the welder further continues the weld of step e) towards a second predetermined spot (2) along the welding sample (10).

10. The method according to at least one of claims 1 to 9 wherein the communication from the application on the computer

- is to a headset and/or to the microphone, and/or
- informs the welder of the welding speed.

11. The method according to at least one of claims 1 to 10 wherein the welding speed is selected from the group consisting of too slow, too fast or correct.

12. The method according to at least one of claims 1 to 11 wherein the welder adjusts the welding speed based upon the communication from the application on the computer.

13. A welding training apparatus comprising

- a computer, in particular a smartphone,
- a welding torch,
- a welding sample (10), in particular a joint between two pieces of metal, and
- a welding apparel, in particular being selected from the group consisting of a welding helmet, goggles, gloves, vest and jacket,

wherein the welding apparel contains a microphone in communication with the computer, in particular being connected to the computer, said connection for example being selected from the group consisting of wired connections and wireless connections, such as a Bluetooth connection.

14. The welding training apparatus according to claim 13 wherein the computer further comprises means to interpret the spoken command.

15. Use of at least one welding training apparatus according to claim 13 or 14 for training, in particular during welding operations, for example during production welding operations, a welder to weld more efficiently.

FIG. 1

FIG. 2

# *FIG. 3A*

Ag, Ar2=0

Ar1

# FIG. 3B

Ag=0

FIG. 3C

# FIG. 3D

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 464 957 A (KIDWELL J JEFFREY [US] ET AL) 7 November 1995 (1995-11-07) * column 1, line 49 - line 52; figure 1 * ----- | 1-15 | INV. G09B19/00 G09B19/24 G09B25/00 B23K1/00 |
| X | US 2014/272836 A1 (BECKER WILLIAM J [US]) 18 September 2014 (2014-09-18) * paragraphs [0034], [0077]; figures 3-5,9 * ----- | 1-15 | |
| A | Anonymous: "Voice StopWatch - Android Apps on Google Play", , 21 September 2014 (2014-09-21), XP055245425, Retrieved from the Internet: URL:https://play.google.com/store/apps/details?id=com.medcv.voicestopwatch&hl=en [retrieved on 2016-01-27] * the whole document * ----- | 1-15 | |

TECHNICAL FIELDS
SEARCHED    (IPC)

G09B
B23K

The present search report has been drawn up for all claims

| Place of search | Date of completion of the search | Examiner |
|---|---|---|
| Munich | 2 February 2016 | Flores Sanchez, L |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 15 18 5981

This annex lists the patent family members relating to the patent documents cited in the above-mentioned European search report.
The members are as contained in the European Patent Office EDP file on
The European Patent Office is in no way liable for these particulars which are merely given for the purpose of information.

02-02-2016

| Patent document cited in search report | | Publication date | Patent family member(s) | | Publication date |
|---|---|---|---|---|---|
| US 5464957 | A | 07-11-1995 | NONE | | |
| US 2014272836 | A1 | 18-09-2014 | CA | 2897103 A1 | 25-09-2014 |
| | | | CN | 105051802 A | 11-11-2015 |
| | | | EP | 2973507 A1 | 20-01-2016 |
| | | | US | 2014272836 A1 | 18-09-2014 |
| | | | WO | 2014149402 A1 | 25-09-2014 |

EPO FORM P0459

For more details about this annex : see Official Journal of the European Patent Office, No. 12/82